(19) **Europäisches Patentamt**

**European Patent Office**

**Office européen des brevets**

(11) **EP 0 877 152 B1**

(12) **EUROPÄISCHE PATENTSCHRIFT**

(45) Veröffentlichungstag und Bekanntmachung des Hinweises auf die Patenterteilung:
**19.01.2005 Patentblatt 2005/03**

(51) Int Cl.$^7$: **F02B 37/24**

(21) Anmeldenummer: **98108046.8**

(22) Anmeldetag: **02.05.1998**

(54) **Verfahren zur Regelung eines aufgeladenen Verbrennungsmotors und Vorrichtung zur Durchführung des Verfahrens**

Method to regulate a supercharged internal combustion engine and device for implementing the method

Procédé de régulation d'un moteur à combustion interne suralimenté et dispositif pour la mise en oeuvre de ce procédé

(84) Benannte Vertragsstaaten:
**DE FR GB IT SE**

(30) Priorität: **09.05.1997 DE 19719630**

(43) Veröffentlichungstag der Anmeldung:
**11.11.1998 Patentblatt 1998/46**

(73) Patentinhaber: **DaimlerChrysler AG**
**70567 Stuttgart (DE)**

(72) Erfinder:
- **Daudel, Helmut**
  **73614 Schorndorf (DE)**
- **Sumser, Siegfried, Dipl. Ing.**
  **70184 Stuttgart (DE)**

(56) Entgegenhaltungen:
**GB-A- 2 123 895      US-A- 4 428 199**
**US-A- 4 833 886      US-A- 5 025 629**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf ein Verfahren zur Regelung eines aufgeladenen Verbrennungsmotors und eine Vorrichtung zur Durchführung des Verfahrens gemäß den Oberbegriffen der unabhängigen Patentansprüche 1 und 10.

Aus der DE 40 14 398 A1 ist bereits eine Regelung eines aufgeladenen Verbrennungsmotors, dessen Abgasturbolader eine Abgasturbine mit variabler Turbinengeometrie und einen Ladeluftverdichter umfasst bekannt. Der Motor besitzt ein in einem Steuergerät abgespeichertes Last-Drehzahl-Kennfeld, wobei dieses Kennfeld durch eine Vollastlinie nach oben und eine Linie für den Schubbetrieb nach unten begrenzt ist. Um ein möglichst schnelles Erwärmen eines Katalysators nach einem Kaltstart des Verbrennungsmotors zu gewährleisten, aktiviert das Steuergerät in Abhängigkeit von Eingangssignalen für Kühlmitteltemperatur, Abgastemperatur, Drosselklappenstellung und Motordrehzahl eine vorgegebene Position des variablen Turbinenleitgitters, so dass ein Querschnitt der Abgasleitung während des Kaltstarts verringert ist.

Des weiteren ist in der DE 40 25 901 C1 ein Verfahren zur Einstellung eines Ladedrucks bei einem mittels eines Abgasturboladers mit verstellbarem Turbinenleitapparat aufgeladenen Verbrennungsmotor auf einen vorgegebenen betriebspunktabhängigen Ladedrucksollwert beschrieben. Dabei wird zur Verbesserung des Wirkungsgrades des Motors in dessen Instationärbetrieb, insbesondere nach einem positiven Lastwechsel aus niederen Last- und Drehzahlbereichen heraus, der Querschnitt des Turbinenleitapparats verringert und der Ladedruck zunächst nach einer ersten Kennlinie und nach Überschreiten eines Schwellwerts des Abgasgegendrucks nach einer zweiten Kennlinie geregelt.

Aus der Druckschrift GB-A-2 123 895 ist ein Verfahren zur Regelung eines mit einem Abgasturbolader mit variabler Turbinengeometrie aufgeladenen Verbrennungsmotors bekannt. Über eine Regel- und Steuereinheit kann die variable Turbinengeometrie der Abgasturbine in Abhängigkeit von aktuellen Zustands- und Betriebsgrößen der Brennkraftmaschine, welche als Eingangssignale für die Regelund Steuereinheit verwendet werden, eingestellt werden. Aus den Eingangssignalen generiert die Regel- und Steuereinheit gemäß einem hinterlegten Regelgesetz sowie in Abhängigkeit abgespeicherter Kennfelder Ausgangssignale, die über weitere Signalleitungen der einzustellenden variablen Turbinengeometrie zugeführt werden. Hierbei wird auch ein Verdichterkennfeld des Ladeluftverdichters der Abgasturbine berücksichtigt, in welchem Motorbetriebslinien mit konstanter Motordrehzahl eingetragen sind, ebenso Linien mit gleichem Wirkungsgrad.

Ergänzend wird auf die Druckschrift US-4 428 199 verwiesen, aus der ebenfalls ein Verfahren zur Regelung eines mit einem Abgasturbolader mit variabler Turbinengeometrie aufgeladenen Verbrennungsmotors bekannt ist. Der Verbrennungsmotor ist mit einer Regel- und Steuereinheit ausgestattet, welche eine Regelung der variablen Turbinengeometrie in Abhängigkeit von der Motordrehzahl und weiteren motorischen Kenngrößen sowie Verdichterkenngrößen ermöglicht.

Zum allgemeinen technischen Hintergrund wird noch auf die US-PS 4 970 864, US-PS 4 779 423 und US-PS 4 891 947 verwiesen.

Der Erfindung liegt die Aufgabe zugrunde, ein Verfahren zur Regelung eines mit einem Abgasturbolader mit variabler Turbinengeometrie aufgeladenen Verbrennungsmotors und eine Vorrichtung zur Durchführung dieses Verfahrens vorzuschlagen, mit denen die motorseitige Regelung für verschiedene Motorlasten und Motorbetriebsarten wesentlich variabler als im gattungsgemäßen Stand der Technik gestaltet werden kann.

Die Aufgabe wird erfindungsgemäß jeweils durch die Merkmale der Patentansprüche 1 und 10 gelöst. Die Merkmale der Unteransprüche gegeben vorteilhafte Aus- und Weiterbildungen der Erfindung an.

Ein Vorteil des erfindungsgemäßen Verfahrens liegt darin, dass die Informationen des elektronisch gespeicherten Verdichterkennfeldes zur Berechnung zusätzlicher Größen wie z.B. Laderdrehzahl, Pumpgrenzenabstand, Turbineneintrittsdruck, Turbineneintrittstemperatur ggf. unter Zuhilfenahme weiterer gemessener bzw. durch einen Motorregler initiierten Ausgangsgrößen wie z.B. Kraftstoffmenge verwendet werden können. Durch die Abspeicherung von Motor-Betriebslinienscharen mit geringer Interpolationsbreite für jeden Lastzustand des Motors werden hohe Rechengeschwindigkeiten und geringe Totzeiten gewährleistet. Vor allem können momentane Betriebsgrößen des Abgasturboladers wie Laderdrehzahl, Turbineneintrittsdruck und Massendurchsatz aus dem Kennfeld errechnet bzw. entnommen werden. Dies ermöglicht beispielsweise die Einsparung von Drehzahlsensoren für den Abgasturbolader bzw. die Einsparung von Drucksensoren für den Turbineneintrittsdruck.

Bei gewünschtem Abgasrückführbetrieb ist das für diesen nötige Druckgefälle zwischen Abgasseite und Ladeluftseite vorhanden. So wird die Leitgitterposition der Abgasturbine derart eingeregelt, dass ein Eintrittsdruck der Abgasturbine größer als ein Ladeluftdruck stromab des Ladeluftverdichters bzw. stromab eines hinter dem Ladeluftverdichter befindlichen Ladeluftkühlers ist. Durch diese Maßnahme wird zwar der Ladeluftverdichter etwas abseits seines Wirkungsgradoptimismus betrieben, dies ist jedoch zugunsten einer einfach möglichen Abgasrückführung vertretbar.

In einer vorteilhaften Ausgestaltung des Verfahrens werden die im Kennfeld abgelegten Daten durch Linien gleichen Turbineneintrittsdruckes (Isolinien) ergänzt. Hierdurch können dem Kennfeld auch direkt Daten für den Turbineneintrittsdruck in Abhängigkeit von unterschiedlichen Abgasturboladerdrehzahlen, Verdichtermassenströmen und Verdichterdruckverhältnissen entnommen werden.

In einer weiteren Ausgestaltung erfolgt in Abhängigkeit von Motorlast und Motorbetriebsart (z.B. befeuerter Betrieb, Motorbremsbetrieb, Abgasrückführbetrieb) eine bezüglich des Verdichterwirkungsgrades optimale Einstellung der Leitgitterposition der Abgasturbine. So erfolgt eine Verdichter-Adaption im allgemeinen so, daß im befeuerten (Normal-) Betrieb des Verbrennungsmotors Pump- und Stopfgrenze - unter Einschluß einer Höhenreserve - vermieden werden und das Wirkungsgradoptimum des Verdichters im Hauptbetriebsbereich des Motors liegt. Durch Veränderung der Leitgitterposition der Abgasturboladerturbine kann nun für unterschiedliche Motorbetriebsarten die Lage der Betriebslinie im Verdichterkennfeld beeinflusst werden, so dass der Verdichter z.B. auch im Motorbremsbetrieb und im Abgasrückführbetrieb mit einem möglichst hohen Wirkungsgrad berieben wird.

In einer weiteren Ausgestaltung des Verfahrens wird im Motorbremsbetrieb eine den gegebenen Ausgangsbedingungen und der angeforderten Motorbremsleistung entsprechende Regelung der Leitgitterposition ermöglicht.

In einer weiteren Ausgestaltung des Verfahrens kann im Motorbremsbetrieb ein rascher Wechsel von einem niedrigen zu einem höheren Motorbremsniveau erfolgen, indem das Leitgitter der Abgasturbine zunächst bis auf eine im Kennfeld abgespeicherte Sicherheitslinie, die vor einer Pumpgrenze des Verdichters liegt, geschlossen wird und anschließend wieder um einen dem höheren Bremsleistungsniveau entsprechenden Betrag geöffnet wird. Durch das zunächst erfolgende "Übersteuern" (Schließung des Leitgitters bis zum Erreichen der Sicherheitslinie im Kennfeld) wird eine kürzere Zeit für das Einregeln der Neuen Motorbremsleistung benötigt, als bei einer sofortigen Einstellung des Leitgitters auf eine Position, die der anforderten höheren Motorbremsleistung entspricht.

In einer weiteren Ausgestaltung des Verfahrens kann im Motorbremsbetrieb bei unterschiedlicher Bremsleistungsanforderung die Motordrehzahl konstant gehalten werden, indem das Leitgitter entsprechend verstellt wird. Hierdurch ist in vorteilhafter Weise ein Motorbremstempomat realisierbar.

Eine Tempomatfunktion für den normalen Fahrbetrieb ist gemäß einer weiteren Ausgestaltung dadurch realisierbar, dass bei einer Veränderung der Motorlast durch Bergauf- oder Bergabfahrten die Motordrehzahl bei günstigen Verbrauchswerten konstant gehalten wird, indem die Leitgitterposition der Abgasturbine entsprechend verändert wird. Dabei erfolgt eine Konstanthaltung der Drehzahl beispielsweise bei Bergauffahrt durch eine Verringerung und entsprechend bei Bergabfahrt durch eine Vergrößerung des Leitgitterquerschnitts durch die verstellbaren Leitschaufeln der Abgasturbine.

In einer weiteren Ausgestaltung des Verfahrens ist es möglich, alterungsbedingte Kennfeldverschiebungen durch eine adaptive Anpassung von Betriebslinien im Kennfeld durch das Regelungssystem des Motors zu kompensieren.

Ein Vorteil der erfindungsgemäßen Vorrichtung gemäß Anspruch 10 liegt darin, dass eine übersichtliche Basis für Regelungsstrategien für mittels Abgasturbolader mit variabler Turbinengeometrie aufgeladener Verbrennungsmotoren geschaffen wird. So ist eine Regelung des Abgasturboladers im Motorbremsbetrieb, im befeuerten Motorbetrieb wie auch im Abgasrückführbetrieb über nur ein hinterlegtes Verdichter-Kennfeld möglich, in dem für unterschiedliche Motorbetriebsarten alle benötigten Parameter und Betriebslinien abgelegt sind.

Weitere Vorteile der Erfindung gehen aus den übrigen Unteransprüchen und der Beschreibung hervor.

In den Zeichnungen ist die Erfindung der Übersichtlichkeit halber anhand mehrerer skizzierter Kennfelder näher erläutert. Das erfindungsgemäße Kennfeld ist jedoch vorzugsweise ein einziges elektromagnetisches Kennfeld, in dem alle gezeigten Kennfelder zusammengefasst sind und das in einem nicht gezeigten elektronischen Speicher abgelegt ist.

Dabei zeigen:

Fig. 1      ein erstes Kennfeld, das ein Verdichterkennfeld des Ladeluftverdichters umfasst, das bei unterschiedlichen Abgasturbolader-Drehzahlen und Verdichter-Wirkungsgraden den Zusammenhang zwischen Massendurchsatz und Totaldruckverhältnis darstellt, wobei in dem Kennfeld zudem ein Netz von Motor-Betriebslinien für konstante Leitgitterpositionen der Abgasturbine und konstante Motordrehzahlen für eine Motorbetriebsart (z.B. Motorbrems-Betrieb) abgelegt ist,

Fig. 2      ein weiteres Kennfeld analog Fig. 1, jedoch zusätzlich mit abgespeicherten Motor-Betriebslinien für konstanten Turbineneintrittsdruck,

Fig. 3      das Kennfeld aus Fig. 1, in dem im Motorbremsbetrieb eine über die Regelung des Leitgitters initiierte Instationärphase beim Übergang von einem niederen Bremsleistungsniveau zu einem höheren Bremsleistungsniveau derart durchgeführt wird, daß das Leitgitter der Abgasturbine zunächst bis auf eine im Kennfeld abgespeicherte, vor der Pumpgrenze des Verdichters liegende Sicherheitslinie geschlossen und anschließend wieder um einen dem höheren Bremsleistungsniveau entsprechenden Betrag geöffnet wird,

Fig. 4      ein weiteres Kennfeld, in dem zusätzlich zum Verdichterkennfeld charakteristische Motor-Betriebslinien (Vollast-Betriebslinie, instationäre Betriebslinie, Turbo-Brake-Betriebslinie) für eine einzige Leitgitterposition der Abgasturbine abgespeichert sind,

Fig. 5      ein weiteres Kennfeld, in dem zusätzlich zum Verdichterkennfeld eine charakteristische Betriebslinie für verbrauchsoptimalen Motorbetrieb und ein Bereich möglicher Abgasrückführung bei Vollast des Motors für verschiedene Leitgitterpositionen der Abgasturbine abgespeichert ist und

Fig. 6      ein weiteres Kennfeld analog Fig. 5 für Teillast des Motors.

Zur Erläuterung des erfindungsgemäßen Verfahrens soll zunächst die nicht dargestellte Vorrichtung zur Durchführung des Verfahrens beschrieben werden. Diese umfaßt in prinzipiell bekannter Weise einen aufgeladenen Verbrennungsmotor, dessen Abgasturbolader ATL eine Abgasturbine TU mit variabler Turbinengeometrie und einen Ladeluftverdichter VD besitzt, wobei der Verbrennungsmotor ein unten näher beschriebenes erfindungsgemäßes Kennfeld KF aufweist, in dem für eine Vielzahl von Motorbetriebspunkten M-BP zugehörige Sollparameter für den Motorbetrieb elektronisch abgespeichert sind, die einem Motorregler als Eingangsgröße zum Soll-Istwert-Vergleich dienen.

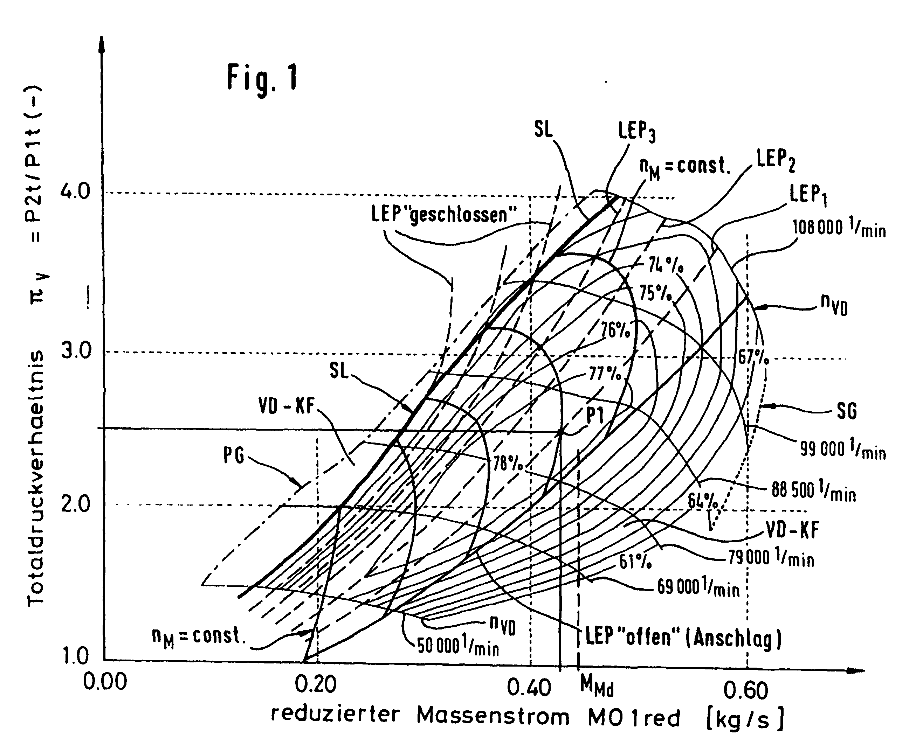

In Fig. 1 ist ein Teil des erfindungsgemäßen Kennfeldes dargestellt, das ein Verdichterkennfeld VD-KF des Ladeluftverdichters VD und mit diesem elektronisch gekoppeltes Netz von Motor-Betriebslinien M-BL für konstante Leitgitterpositionen LEP ($LEP_1$ - $LEP_3$) der Abgasturbine und konstante Motordrehzahlen $n_M$ für eine Motorbetriebsart (hier: unbefeuerter Betrieb des Verbrennungsmotors im Motorbremsbetrieb) für verschiedene Luft-Massendurchsätze $M_{Mot}$ des Motors umfaßt.

Weitere, nicht dargestellte Teile des Kennfeldes umfassen in analoger Weise das Verdichterkennfeld VD-KF und ein Netz von Motorbetriebslinien M-BL für konstante Leitgitterpositionen der Abgasturbine und konstante Motordrehzahlen für andere Motorbetriebsarten, wie etwa befeuerter Motorbetrieb, Abgasrückführbetrieb und Motorbremsbetrieb mit Konstantdrossel oder mit getaktetem Motorbremsventil.

Auf der Abszisse des in Fig. 1 dargestellten Teiles des elektronisch abgespeicherten Kennfeldes ist der reduzierte (normierte) Massenstrom $M_{red}$ des Ladeluftverdichters aufgetragen, wobei für

$$M_{red} = M * \frac{\sqrt{\dfrac{Tt1}{Tbez}}}{\dfrac{pt1}{pbez}} \qquad [kg/s]$$

gilt;
mit: M = Massenstrom [kg/s]; Tt1, pt1 = Temperatur bzw.

Druck am Verdichtereintritt; Tbez, pbez = Bezugstemperatur (z.B. 293 K) bzw. Bezugsdruck (z.B. 981 mbar). Auf der Ordinate ist das Totaldruckverhältnis $\Pi$ = p2t / p1t darstellt (mit p2t = Verdichter-Austrittsdruck und p1t = Verdichter-Eintrittsdruck).

Das Verdichterkennfeld VD-KF des Ladeluftverdichters stellt für unterschiedliche Verdichter-Drehzahlen $n_{VD}$ (beispielhaft: Werte für $n_{VD}$ von 50000 1/min bis 108000 1/min) und Verdichter-Wirkungsgrade $\eta_{VD}$ (beispielhaft: Werte für $\eta_{VD}$ von 61 % bis 78 %) den Zusammenhang zwischen Massendurchsatz $M_{red}$ und Totaldruckverhältnis $\Pi$ dar. Die Linien gleichen Wirkungsgrades $\eta_{VD}$ verlaufen muschelartig und die Linien gleicher Verdichterdrehzahl $n_{VD}$ sind im Verdichterkennfeld VD-KF als von links oben nach rechts unten flach abfallende Kurven dargestellt.

Da die Abgasturbine und der Ladeluftverdichter bei üblichen Abgasturboladern für Verbrennungsmotoren mit einer gemeinsamen Welle drehfest verbunden sind, entspricht die Drehzahl des Verdichterlaufrades jener des Turbinenlaufrades ($n_{VD}$ = $n_{TU}$ = $n_{ATL}$).

Das Verdichterkennfeld VD-KF ist links durch die Pumpgrenze PG und rechts durch die Stopfgrenze SG des Verdichters begrenzt. An der Pumpgrenze des Verdichters werden die Strömungsablösungen im äußeren Schaufelbereich des Radeintritts bei einem gegebenen Totaldruckverhältnis so stark, daß eine weitere Abnahme des Massenstromes $M_{red}$ zur vollständigen Instabilität der Radeintrittsströmung führt. Links der Pumpgrenze PG ist deshalb kein stabiler Druckaufbau und deshalb auch kein stabiler Betrieb des Verdichters möglich. An der Stopfgrenze SG stellt sich im engsten effektiven Strömungsquerschnitt (meist im Radschaufeleintritt) des Verdichters Schallgeschwindigkeit ein, wodurch eine weitere Steigerung des Eintrittsvolumenstromes bzw. Massenstromes bei vorgegebenem Totaldruckverhältnis $\Pi$ physikalisch verhindert wird. Das Verdichterkennfeld VD-KF ist nach oben durch die maximal zulässige Verdichterdrehzahl $n_{VD}$, die von der Durchmesserund Werkstoffabhängigen Berstdrehzahl des Verdichterlaufrades bestimmt wird, begrenzt.

Des weiteren umfaßt das Kennfeld ein Netz von Motorbetriebslinien M-BL für konstante Leitgitterpositionen LEP der Abgasturbine und für konstante Motordrehzahlen $n_M$ bei verschiedenen Massendurchsätzen $M_{Mot}$ des Motors, das mit dem Verdichterkennfeld VD-KF elektronisch gekopopelt ist. Es ist also für ein gegebenes Totaldruckverhältnis $\Pi$ und gegebenen Massenstrom $M_{red}$ eine Zuordnung von Motordrehzahl $n_M$ und Leitgitterposition LEP im Kennfeld möglich. Dabei entspricht im befeuerten Motorbetrieb und im Motorbremsbetrieb der Luft-Massendurchsatz $M_{Mot}$ dem Massendurchsatz $M_{red}$ des Ladeluftverdichters.

Die Motor-Betriebslinien M-BL werden üblicherweise aus Motormessungen (Bremsversuchen, Berechnungen) erzeugt, wobei die Betriebslinien für befeuerten Motorbetrieb sowie für den Motorbremsbetrieb aufgenommen werden. Es können auch unterschiedli-

che Motorbremsbetriebsarten (z.B. Konstandrosselung, dh. Motorbremsventil dauernd geöffnet, getaktetes Motorbremsventil oder geschlossenes Motorbremsventil (reiner Schleppbetrieb)) unterschieden werden. In Fig. 1 sind jedoch nur die Motorbetriebslinien M-BL für den befeuerten Betrieb eingezeichnet. Wie oben ausgeführt, sind für andere Motorbetriebsarten entsprechende Netze von Motorbetriebslinien M-BL im Kennfeld abgespeichert und mit dem Verdichterkennfeld VD-KF elektronisch gekoppelt.

In Fig. 1 ist zu erkennen, daß bei geschlossenem oder beinahe geschlossenem Turbinenleitgitter (LEP "geschlossen") theoretische Betriebslinien im Verdichterkennfeld links der Pumpgrenze PG liegen. Deshalb besitzt das Kennfeld eine sogenannte Sicherheitslinie SL, die in einem Sicherheitsabstand rechts der Pumpgrenze PG im Kennfeld liegt. Wenn im Betrieb des Ladeluftverdichters die Sicherheitslinie SL erreicht wird, dann wird das Turbinenleitgitter mit steigender Motordrehzahl $n_M$ geöffnet. Somit werden im Motorbetrieb lediglich Betriebspunkte auf oder rechts der Sicherheitslinie SL des Verdichterkennfeldes VD-KF angefahren.

Durch die erfindungsgemäße elektronische Koppelung des verdichterkennfeldes VD-KF mit dem Netz von Motor-Betriebslinien M-BL für konstante Leitgitterpositionen LEP ($LEP_1$ - $LEP_3$) und konstante Motordrehzahlen $n_M$ bei verschiedenen Luft-Massendurchsätzen $M_{Mot}$ gleichzeitig für verschiedene Motorbetriebsarten, kann dem Kennfeld in Abhängigkeit von Motorlast und/oder Motordrehzahl $n_M$ eine bevorzugte, beispielsweise wirkungsgradoptimale Leitgitterposition LEP des Leitgitters der Abgasturbine, für die jeweils vorliegende Motorbetriebsart (befeuerter Motorbetrieb, Motorbremsbetrieb, Abgasrückführbetrieb) entnommen und am Leitgitter LE der Abgasturbine TU eingeregelt werden.

Eine Variante des erfindungsgemäßen Verfahrens soll im folgenden für den Motorbremsbetrieb näher beschrieben werden. Die Reglereingangsgrößen für den Motorregler sind neben der Bremsleistungsanforderung (z.B. Bremspedal oder Motorbremsknopf) das gemessene Totaldruckverhältnis $\Pi$ des Verdichters und der Massenoder Volumenstrom des Motors $M_{Mot}$ bzw. des Ladeluftverdichters $M_{red}$. Über die Normierungsgrößen $T_{bez}$ und $p_{bez}$ kann somit ein Motorbetriebspunkt M-BP im Kennfeld bestimmt werden. Dieser Motorbetriebspunkt M-BP ist in Fig. 1 mit P1 bezeichnet. Wie oben bereits ausgeführt, ist aus den o.g. Motormessungen das Netz von Betriebslinien für konstante Leitgitterposition LEP und konstante Motordrehzahl $n_M$ mit dem Kennfeld elektronisch gekoppelt. Somit ist aus den gemessenen Eingangsgrößen "Massenstrom $M_{red}$" und "Totaldruckverhältnis $\Pi$" direkt die Ausgangsgröße "Turbinenleitgitterstellung LEP" entnehmbar, mit der die angeforderte Bremsleistung gekoppelt ist. In Fig. 1 ist dem Motorbetriebspunkt P1 die Leitgitterposition $LEP_1$ im *Kennfeld zugeordnet und kann so dem Kennfeld KF entnommen werden*.

Je nach Motorbremsbetriebsart (Konstandrossel, getaktetes Motorbremsventil, Schleppbetrieb) wird eine für die spezielle Motorbremsbetriebsart und die übrigen Motorbetriebsparameter definierte Leitgitterposition LEP automatisch angefahren. Zur Sicherheitsüberwachung steht dem Regelungssystem Verdichterdrehzahl $n_{VD}$ über das Verdichterkennfeld VD-KF zur Verfügung.

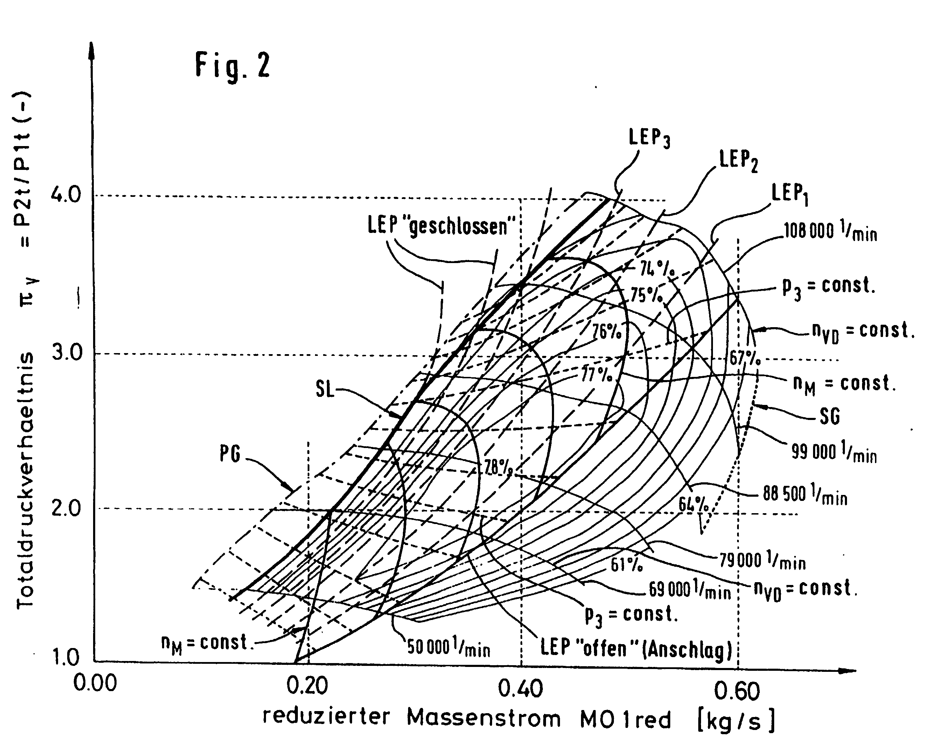

Fig. 2 zeigt ein weiteres Kennfeld analog zu Fig. 1. Gleiche Betriebslinien und Parameter aus Fig. 1 sind mit gleichen Bezeichnungen gekennzeichnet. Zusätzlich sind im Kennfeld gemäß Fig. 2 elektronisch abgespeicherte Motor-Betriebslinien M-BL für konstanten Turbineneintrittsdruck $p_3$ ($p_3$ = const.) enthalten. Somit kann dem Kennfeld für unterschiedliche Verdichterdrehzahlen $n_{VD}$ (bzw. Abgasturbolader-Drehzahlen $n_{ATL}$), Verdichtermassenströme $M_{red}$ und Verdichter-Totaldruckverhältnisse $\Pi$ ein zugehöriger Turbineneintrittsdruck $p_3$ der Abgasturbine entnommen werden.

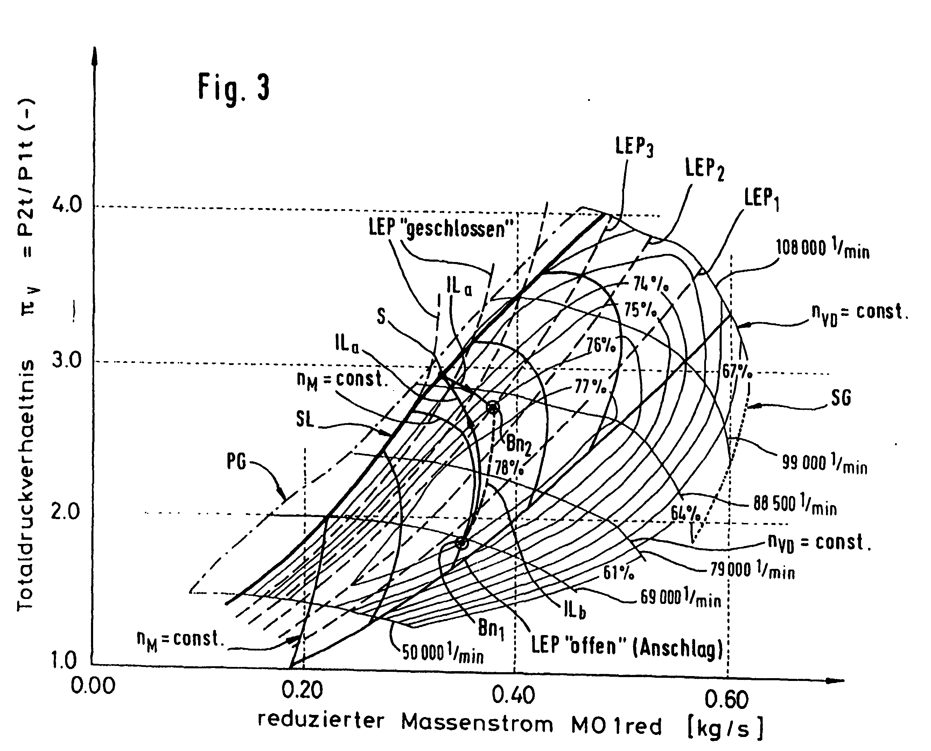

In dem Kennfeld gemäß Fig. 3 sind gleiche Betriebslinien und Parameter aus Fig. 1 mit gleichen Bezeichnungen gekennzeichnet. Fig. 3 zeigt eine Motorbremsregelung von einem niedrigen Bremsleistungsniveau $Bn_1$ zu einem erhöhten Bremsleistungsniveau $Bn_2$. Um das erhöhte Bremsleistungsniveau $Bn_2$ möglichst schnell zu erreichen, erfolgt ausgehend vom Bremsleistungsniveau $Bn_1$ zunächst ein Schließen des Turbinenleitgitters LE solange, bis im Verdichterkennfeld VD-KF die Sicherheitslinie SL erreicht ist (Punkt S in Fig. 3). Anschließend wird das Turbinenleitgitter LE so weit geöffnet, wie es dem erhöhten Bremsleistungsniveau $Bn_2$ entspricht. Durch diese gezielte "Übersteuerung" in Richtung zur Sicherheitslinie SL wird das gewünschte Bremsniveau $Bn_2$ relativ schnell erreicht. Die über die Regelung des Turbinenleitgitters LE initiierte Instationärlinie $IL_a$ im Motorbremsbetrieb verläuft also nicht direkt von $Bn_1$ zu $Bn_2$, wie sie in der strichlierten Linie $IL_b$ entspräche, da auf der Linie $IL_b$ das Erreichen des Betriebspunktes $Bn_2$ eine längere Zeit in Anspruch nehmen würde.

In einer Ausgestaltung des Verfahrens läßt sich im Motorbremsbetrieb ein Bremstempomat realisieren, indem die Bremsleistungsanforderung an den Motor durch eine automatische Verstellung der Leitgitterposition LEP der Abgasturbine derart verändert wird, daß die Motordrehzahl $n_M$ konstant bleibt.

Sodann kann auch bei einer Veränderung der Motorlast, wie etwa Lasterhöhung bei Bergauffahrt oder Lastverminderung bei Bergabfahrt, die Motordrehzahl $n_M$ konstant gehalten wird, indem ebenfalls die Leitgitterposition LEP der Abgasturbine entsprechend verändert wird.

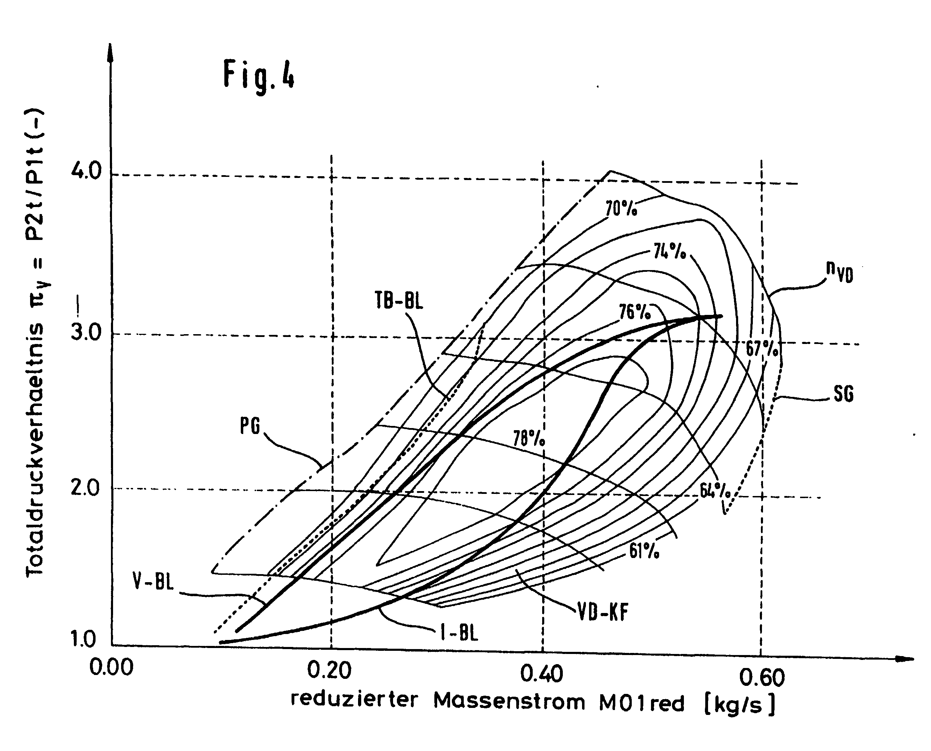

Fig. 4 zeigt ein weiteres Kennfeld, in dem zusätzlich zum Verdichterkennfeld charakteristische Motor-Betriebslinien M-BL abgespeichert sind, der Übersichtlichkeit halber zunächst jedoch nur für eine Leitgitterposition LEP der Abgasturbine TU. Gleiche Betriebslinien und Parameter aus Fig. 1 sind mit gleichen Bezeichnungen gekennzeichnet. Die im Verdichterkennfeld VD-KF zusätzlich abgespeicherten Motor-Betriebslinien M-BL sind eine Vollast-Betriebslinie V-BL, eine instationäre Betriebslinie I-BL und eine Betriebslinie für Turbo-Brake TB-BL. Es ist zu erkennen, daß die Motor-Betriebslinien M-BL im wirkungsgradoptimalen Betriebsbereich des Ladeluftverdichters liegen. Eine maßgebende Beeinflussung der Lage und Form der Motor-Betriebslinien M-BL im Verdichterkennfeld VD-KF läßt sich über die gewählte Turbinenauslegung bewirken. Der Einsatz einer relativ kleinen Abgasturbine bewirkt, daß die Vollast-Betriebslinie des Motors näher an die Pumpgrenze PG verläuft und daß dadurch im unteren Motordrehzahlen eine höhere Luftzahl erreichbar ist oder daß ein höheres Motormoment realisierbar ist. Der Verlauf der Instationärlinie wird hauptsächlich durch das polare Massenträgheitsmoment des Laufzeugs des Abgasturboladers (Welle und Laufräder) bestimmt.

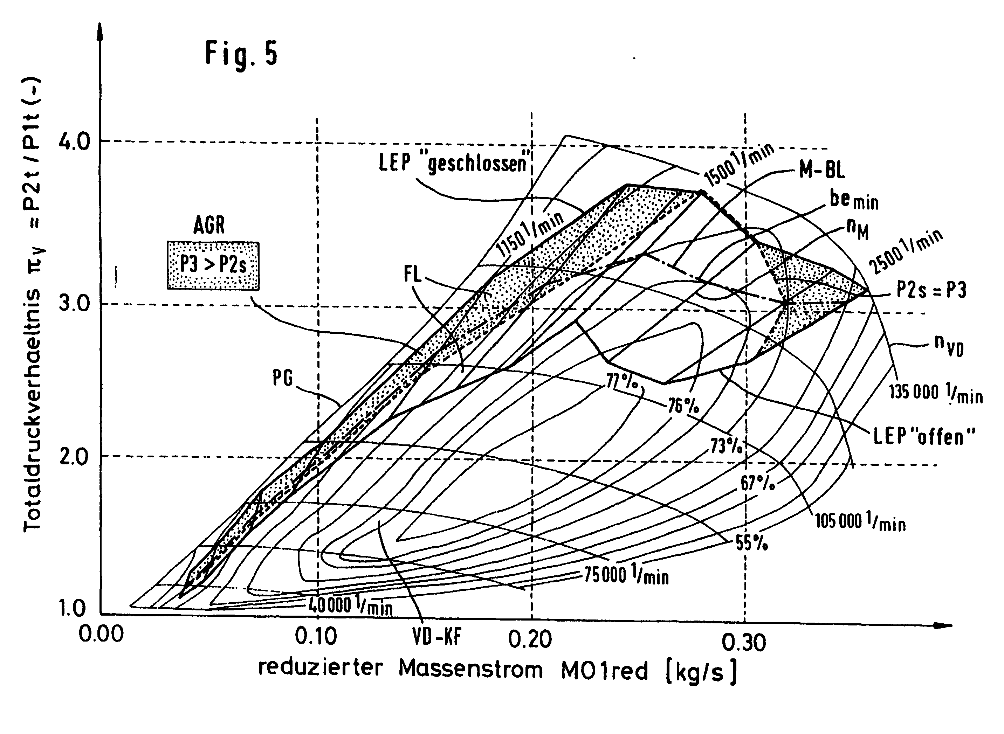

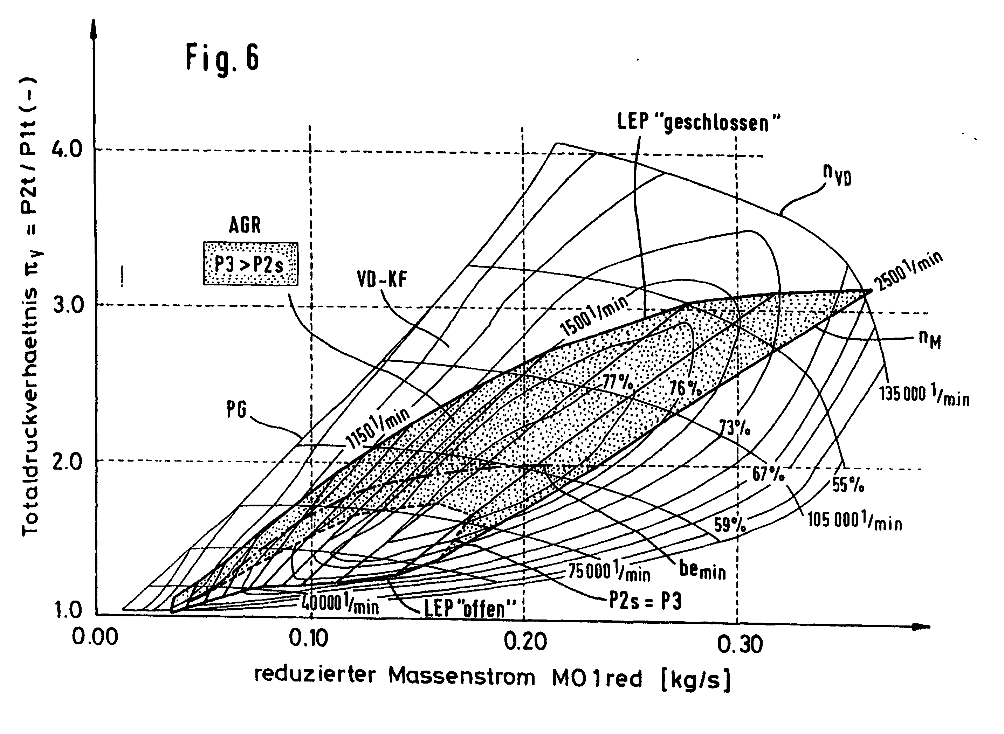

In den Fig. 5 und 6 ist jeweils ein weiteres Kennfeld dargestellt, in dem zusätzlich zum Verdichterkennfeld charakteristische Motor-Betriebslinien M-BL für verbrauchsoptimalen Motorbetrieb (verbrauchsoptimale Betriebslinie $be_{min}$) und ein Bereich möglicher Abgasrückführung bei Vollast des Motors (Fig. 5) bzw. für 50 % - Teillast des Motors (Fig. 6) für verschiedene Leitgitterpositionen der Abgasturbine (LEP "geschlossen" bis LEP "offen") dargestellt ist.

Beim Einsatz einer Abgasturbine mit variabler Turbinengeometrie, d.h. bei Verwendung eines Leitgitters mit verstellbaren Schaufeln und daher unterschiedlichen möglichen Leitgitterpositionen LEP, ergibt sich nicht nur, wie beim Einsatz von Festgeometrieturbinen, eine einzige Vollast-Betriebslinie im Verdichterkennfeld (vgl. Fig. 4), sondern es gibt für jede Schaufelstellung (Leitgitterposition LEP) eine gesonderte Vollast-Betriebslinie im Verdichterkennfeld VD-KF. Im Verdichterkennfeld VD-*KF* wird dann für eine entsprechende Lastlinie (Fig. 5: Vollastlinie) eine Fläche FL überdeckt, die die Parameter Motordrehzahl und Leitgitterposition LEP (Schaufelstellung) aufweist. Somit kann mit Abgasturboladern mit variabler Turbinengeometrie ein Motorbetriebspunkt M-BP bei unterschiedlichen Luftzahlen (Volumenstrom bzw. Massenstrom $M_{red}$, Druckverhältnis) und Abgasturbolader-Wirkungsgraden $\eta_{ATL}$ gefahren werden.

Dieser Freiheitsgrad durch das variable Turbinenleitgitter ist in Fig. 5 für die Vollastlinie zu sehen (Fläche FL). In die durch die verstellbaren Schaufeln zu nutzende breite Betriebsfläche im Verdichterkennfeld VD-KF sind vorzugsweise folgende markante Motor-Betriebslinien M-BL, die für die Regelung des aufgeladenen Motors relevant sind, abgespeichert:

- Grenzlinien für Leitgitterposition LEP (=Schaufelstellung) vollständig geöffnet und Schaufelstellung geschlossen,
- Leitgitterposition LEP für eine verbrauchsoptimale Motor-Betriebslinie $be_{min}$,

- Leitgitterposition LEP für eine Motor-Betriebslinie M-BL, die eine Grenze des Abgasrückführbereichs AGR markiert. Auf dieser Betriebslinie gilt, daß der Druck an einer Abgasrückführstelle im Ladelufttrakt (z.B. stromab eines Ladeluftkühlers) gleich dem Turbineneintrittsdruck $p_3$ der Abgasturbine TU ist ($p_{2s} = p_3$) und
- eine Instationärlinie für das Hochlaufen des Motors (siehe Fig. 4).

Die Grenzlinie "Leitgitterposition geöffnet" (Schaufeln geöffnet) bedeutet, daß entweder der obere mechanische Anschlag des variablen Leitgitters erreicht wurde oder das Luftverhältnis bzw. die Rauchgrenze und die Abgastemperatur des gewünschten Motormoments ein prinzipielles weiteres Öffnen des Leitgitterquerschnitts verhindert. Wird bezüglich der Vollastlinie eine im Schluckverhalten relativ große Turbine verwendet, so ist gegenüber der Stellung "Schaufeln geschlossen" nur ein kleiner Winkelbereich des Leitgitters bis zur Stellung "Schaufeln geöffnet" nutzbar, da sonst eine Überschreitung der Rauchgrenze erfolgt, d.h. es findet keine vollständige Verbrennung des Luft-Kraftstoff-Gemischs im Zylinder statt. Die großen Öffnungsreserven der verstellbaren Schaufeln können dann nur im Teillastgebiet (siehe Fig. 6) umgesetzt werden. Die Anwendung einer im Schluckverhalten kleinen Turbine mit variabler Turbinengeometrie führt im Betrieb am oberen mechanischen Anschlag (Schaufelstellung "offen") zu relativ großen Luftverhältnissen, die Ladungswechselnachteile bringen. Der Verstellbereich ist dadurch relativ eng.

Die Grenzlinie "Schaufeln geschlossen" bedeutet, je nach Schluckfähigkeit der Turbine, einen Betrieb der Turbine

- am unteren mechanischen Schaufelanschlag, bei dem sich die vom Hersteller vorgeschriebene minimale Durchströmfläche im Schaufelaustritt ergibt,
- mit einer Position der Schaufeln, bei der die Pumpgrenze PG des Verdichters (bzw. die vor der Pumpgrenze PG liegende Sicherheitslinie SL) gerade nicht überschritten wird,
- am maximal zulässigen Zylinderdruck oder
- am maximal zulässigen Abgasgegendruck (Turbineneintrittsdruck $p_3$).

Innerhalb der nutzbaren Fläche FL des Verdichterkennfeldes VD-KF, die durch die Schaufelgrenzstellungen (LEP "offen", LEP "geschlossen") der Turbine bestimmt wird, kann als wichtige Betriebslinie die verbrauchsoptimale Betriebslinie $be_{min}$ des Motors im Kennfeld abgespeichert werden.

Die optimale Verbrauchslinie $be_{min}$ in Abhängigkeit des Parameters Leitgitterposition LEP (Schaufelstellung), verläuft im Vollastzustand bei qualitativer Betrachtung in der Regel immer näher an der geschlossenen als an der geöffneten Leitgitterposition LEP, vorausgesetzt es handelt sich um eine geeignete Laderabstimmung an den betreffenden Motor. Im unteren Motordrehzahlbereich wird die vermehrte Luftlieferung mit Wirkungsgradeinbußen des Abgasturboladers erkauft, während im oberen Motordrehzahlbereich ein günstiger Verbrauch durch eine hohe Schluckfähigkeit der Turbine unterstützt wird, wodurch der Ladungswechsel positiv beeinflußt wird. Mit abnehmender Last entfernt sich die verbrauchsoptimale Schaufelposition $be_{min}$ immer mehr von der geschlossenen Schaufelstellung (siehe Fig. 5 rechts oben). Dies gilt besonders für niedere Lasten im hohen Motordrehzahlbereich.

Ferner kann innerhalb der nutzbaren Fläche FL des Verdichterkennfeldes VD-KF eine Teilfläche bestimmt werden, innerhalb der die Abgasrückführung AGR von der Abgasseite auf die Ladeluftseite des Verbrennungsmotors stattfinden kann.

Die mittlere Druckdifferenz $pe_m$ zwischen dem Turbineneintrittsdruck $p_3$ und dem Druck hinter dem Ladeluftverdichter $p_2$ bzw. hinter dem Ladeluftkühler $p_{2s}$ kann als Anhaltspunkt genutzt werden, ob Abgas zur Luftseite stromab dem Verdichter gefördert werden kann. Dabei ist folgendes zu beachten: je besser der Gesamtwirkungsgrad des Abgasturboladers $\eta_{ATL}$ im betreffenden Betriebspunkt ist, um so schwieriger oder gar unmöglich ist die Abgasrückführung, sofern nicht zusätzliche Hilfsmittel (z.B. Ejektoren) verwendet werden.

Der Abgasturbolader mit einer Turbine mit variabler Turbinengeometrie bietet jedoch durch die Möglichkeit der gezielten Verschlechterung des Gesamtwirkungsgrades des Abgasturboladers $\eta_{ATL}$ mittels geeigneter Leitgitterquerschnittsverengungen die Möglichkeit an, das notwendige negative Druckgefälle $P_{2s}$ - $p_3$ in breiten Betriebsbereichen des Motors für die Abgasrückführung zu erzeugen, vorausgesetzt die Zylinderdruckgrenze und die Drehzahlgrenze des Abgasturboladers werden nicht überschritten. In Fig. 5 ist die Teilfläche im Verdichterkennfeld VD-KF gepunktet dargestellt, auf der eine Abgasrückführung AGR möglich ist. Sie in Fig. 6 ersichtlich, ist für Teillast (50 % - Last) eine wesentlich größere Abgasrückführ-Betriebsfläche möglich. Es kann somit bei gewünschtem Abgasrückführbetrieb des Motors die Leitgitterposition LEP gezielt derart eingeregelt werden, daß ein Turbineneintrittsdruck $p_3$ größer als ein Druck $p_2$ stromab des Verdichters bzw. stromab eines Ladeluftkühlers auf der Ladeluftseite des Motors ist, auch wenn dies mit einer geringen Wirkungsgradeinbuße des Abgasturboladers erkauft wird.

In einer weiteren Ausgestaltung der Erfindung kann die Lage ausgewählter Betriebslinien im Kennfeld adaptiv vom Regelungssystem des Motors korrigiert werden, um nach langen Betriebszeiten des Abgasturboladers einen eventuellen Materialverschleiß oder Schaufelablagerungen kompensieren zu können.

Des weiteren kann in einer Ausgestaltung der Erfindung das Verfahren dahingehend erweitert werden, daß die Regelung des Verbrennungsmotors auch über elektronisch abgespeicherte Turbinenkennfelder der Abgasturbine erfolgt.

**Patentansprüche**

1. Verfahren zur Regelung eines aufgeladenen Verbrennungsmotors, dessen Abgasturbolader eine Abgasturbine mit variabler Turbinengeometrie und einen Ladeluftverdichter umfasst, wobei der Motor ein Kennfeld aufweist, in dem für eine Vielzahl von Motorbetriebspunkten zugehörige Sollparameter für den Motorbetrieb elektronisch abgespeichert sind, die einem Motorregler als Eingangsgröße zum Soll-Istwert-Vergleich dienen, und das Kennfeld ein elektronisch gespeichertes Verdichterkennfeld (VD-KF) des Ladeluftverdichters (VD) umfasst, das bei unterschiedlichen Abgasturbolader-Drehzahlen ($n_{ATL}$) den Zusammenhang zwischen Massendurchsatz ($M_{red}$) und Totaldruckverhältnis ($\Pi$) darstellt und in dem Kennfeld zudem eine Vielzahl von Motor-Betriebslinien (M-BL) für konstante Leitgitterpositionen (LEP) der Abgasturbine und konstante Motordrehzahlen ($n_M$) bei verschiedenen Motorlasten und Motorbetriebsarten (befeuerter Betrieb, Motorbremsbetrieb, Abgasrückführbetrieb) abgelegt sind, wobei dem Kennfeld in Abhängigkeit von Motorlast und/oder Motordrehzahl ($n_M$) eine bevorzugte Leitgitterposition (LEP) des Leitgitters (LE) der Abgasturbine für die jeweils vorliegende Motorbetriebsart entnommen und am Leitgitter (LE) der Abgasturbine eingeregelt wird,
**dadurch gekennzeichnet,**
**dass** im Abgasrückführbetrieb des Motors die Leitgitterposition (LEP) derart eingeregelt wird, dass ein Turbineneintrittsdruck ($p_3$) größer als ein Druck ($p_{2s}$) stromab des Verdichters bzw. stromab eines Ladeluftkühlers auf der Ladeluftseite des Motors ist.

2. Verfahren nach Anspruch 1,
**dadurch gekennzeichnet,**
**dass** das Kennfeld zusätzlich elektronisch abgespeicherte Motorbetriebslinien (M-BL) für konstanten Turbineneintrittsdruck ($p_3$) enthält, sodass dem Kennfeld für unterschiedliche Abgasturbolader-Drehzahlen ($n_{ATL}$), Verdichter-Massenströme ($M_{red}$) und Verdichter-Druckverhältnisse ($\Pi$) ein zugehöriger Turbineneintrittsdruck ($p_3$) entnommen werden kann.

3. Verfahren nach Anspruch 1 oder 2,
**dadurch gekennzeichnet,**
**dass** in Abhängigkeit von Motorlast und Motorbetriebsart eine bezüglich des Verdichterwirkungsgrades ($\eta_{VD}$) optimale Einstellung der Leitgitterposition (LEP) der Abgasturbine erfolgt.

4. Verfahren nach einem der vorangehenden Ansprüche,
**dadurch gekennzeichnet,**
**dass** bei einer Veränderung der Motorlast (Lasterhöhung oder Lastverminderung) die Motordrehzahl ($n_M$) konstant gehalten wird, indem die Leitgitterposition (LEP) der Abgasturbine verändert wird.

5. Verfahren nach einem der vorangehenden Ansprüche,
**dadurch gekennzeichnet,**
**dass** im Motorbremsbetrieb bei einer Betätigung eines Motorbremsventils aus dem Kennfeld über den vorgegebenem Verdichtermassenstrom ($M_{red}$) und das vorgegebene Verdichter-Totaldruckverhältnis ($\Pi$) eine der angeforderten Motorbremsleistung entsprechende Leitgitterposition (LEP) entnommen wird.

6. Verfahren nach Anspruch 5,
**dadurch gekennzeichnet,**
**dass** im Motorbremsbetrieb die Instationärphase beim Übergang von einem niederen Bremsleistungsniveau ($Bn_1$) zu einem höheren Bremsleistungsniveau ($Bn_2$) derart durchgeführt wird, dass das Leitgitter (LE) der Abgasturbine zunächst bis auf einen einer im Kennfeld abgespeicherten, vor einer Pumpgrenze (PU) des Verdichters liegende Sicherheitslinie (SL) entsprechenden Betrag geschlossen und anschließend wieder um einen dem höheren Bremsleistungsniveau ($Bn_2$) entsprechenden Betrag geöffnet wird.

7. Verfahren nach Anspruch 5,
**dadurch gekennzeichnet,**
**dass** im Motorbremsbetrieb die Bremsleistungsanforderung an den Motor durch eine automatische Verstellung der Leitgitterposition (LEP) der Abgasturbine derart verändert wird, dass die Motordrehzahl ($n_M$) konstant bleibt.

8. Verfahren nach einem der vorangehenden Ansprüche,
**dadurch gekennzeichnet,**
**dass** die Lage ausgewählter Betriebslinien im Kennfeld adaptiv vom Regelungssystem des Motors korrigiert werden kann.

9. Verfahren nach einem der vorangehenden Ansprüche,
**dadurch gekennzeichnet,**
**dass** in dem Kennfeld zusätzlich Turbinenkennfelder der Abgasturbine abgespeichert sind.

10. Vorrichtung zur Durchführung des Verfahrens nach einem der Ansprüche 1 bis 9, umfassend einen aufgeladenen Verbrennungsmotor, dessen Abgasturbolader eine Abgasturbine mit variabler Turbinengeometrie und einen Ladeluftverdichter besitzt, wobei der Motor ein Kennfeld aufweist, in dem für eine Vielzahl von Betriebspunkten zugehörige Sollparameter für den Motorbetrieb elektronisch abgespeichert sind, die einem Motorregler als Eingangsgröße zum Soll-Istwert-Vergleich dienen, und das Kennfeld ein elektronisch gespeichertes Verdichterkennfeld (VD-KF) des Ladeluftverdichters umfasst, das bei unterschiedlichen Abgasturbolader-Drehzahlen ($n_{ATL}$) den Zusammenhang zwischen Massendurchsatz ($M_{red}$) und Totaldruckverhältnis ($\Pi$) darstellt und in dem Kennfeld zudem eine Vielzahl von Motor-Betriebslinien (M-BL) für konstante Leitgitterpositionen (LEP) der Abgasturbine und konstante Motordrehzahlen ($n_M$) bei verschiedenen Motorlasten und Motorbetriebsarten (befeuerter Betrieb, Motorbremsbetrieb, Abgasrückführbetrieb) abgelegt sind, wobei im Abgasrückführbetrieb des Motors die Leitgitterposition (LEP) derart eingeregelt wird, daß ein Turbineneintrittsdruck ($p_3$) größer als ein Druck ($p_{2s}$) stromab des Verdichters bzw. stromab eines Ladeluftkühlers auf der Ladeluftseite des Motors ist.

11. Vorrichtung nach Anspruch 10,
**dadurch gekennzeichnet,**
**dass** das Kennfeld zusätzlich elektronisch abgespeicherte Motorbetriebslinien (M-BL) für konstanten Turbineneintrittsdruck ($p_3$) enthält.

**Claims**

1. Method for the control of a supercharged internal combustion engine, the turbocharger of which includes an exhaust gas turbine of variable turbine geometry and a charge air compressor, whereby the engine has a characteristic map in which a plurality of set parameters associated with engine operating points, which are used by an engine controller as input variables for a comparison between set and actual values, is electronically stored for engine operation, and whereby the characteristic map includes an electronically stored compressor map (VD-KF) of the charge air compressor (VD) which represents the relationship between mass flow rate ($M_{red}$) and total pressure ratio (TT) at various turbocharger speeds ($n_{ATL}$), and in addition a plurality of engine operating lines (M-BL) for constant guide baffle positions (LEP) of the exhaust gas turbine and constant engine speeds ($n_M$) at various engine loads and engine modes (fired mode, engine braking mode, exhaust gas recirculation mode) is stored in the characteristic map, whereby a guide baffle position (LEP) of the guide baffles (LE) of the exhaust gas turbine which is preferred for the current engine mode it taken from the characteristic map in dependence on engine load and/or engine speed ($n_M$) and adjusted at the guide baffles (LE) of the exhaust gas turbine,
**characterised in that**
the guide baffle position (LEP) is so adjusted in the exhaust gas recirculation mode of the engine that a turbine admission pressure ($p_3$) is higher than a pressure ($p_{2s}$) downstream of the compressor or downstream of an intercooler on the charge air side of the engine.

2. Method according to claim 1,
**characterised in that**
the characteristic map additionally includes electronically stored engine operating lines (M-BL) for a constant turbine admission pressure ($p_3$), so that an associated turbine admission pressure ($p_3$) can be taken from the characteristic map for various turbocharger speeds ($n_{ATL}$), compressor mass flows ($M_{red}$) and compressor pressure ratios (TT).

3. Method according to claim 1 or 2,
**characterised in that**
the guide baffle position (LEP) is optimally adjusted with regard to compressor efficiency ($\eta_{VD}$) in dependence on engine load and engine mode.

4. Method according to any of the preceding claims,
**characterised in that**
the engine speed ($n_M$) is held constant at a change in engine load (load increase or load reduction) by changing the guide baffle position (LEP) of the exhaust gas turbine.

5. Method according to any of the preceding claims,
**characterised in that**
a guide baffle position (LEP) corresponding to the required engine braking power is taken from the characteristic map for the preset compressor mass flow ($M_{red}$) and the preset compressor total pressure ratio (TT) in the engine braking mode if an engine brake valve is actuated.

6. Method according to claim 5,
**characterised in that**
the unsteady phase at the transition from a low braking power level ($Bn_1$) to a higher braking power level ($Bn_2$) is so completed in the engine braking mode that the guide baffles (LE) of the exhaust gas turbine are first closed to an amount corresponding to a safety line (SL) stored in the characteristic map and lying in front of a pulsation limit (PU) of the compressor and then opened by an amount corresponding to the higher braking power level ($Bn_2$).

7. Method according to claim 5,
**characterised in that**
that the braking power required of the engine in the engine braking mode is so adjusted by an automatic adjustment of the guide baffle position (LEP) of the exhaust gas turbine that the engine speed ($n_M$) remains constant.

8. Method according to any of the preceding claims,
**characterised in that**
the position of selected operating lines in the characteristic map can be adaptively corrected by the control system of the engine.

9. Method according to any of the preceding claims,
**characterised in that**
characteristic maps for the exhaust gas turbine are additionally stored in the characteristic map.

10. Device for the execution of the method according to any of claims 1 to 9, comprising a supercharged internal combustion engine provided with a turbocharger with an exhaust gas turbine of variable turbine geometry, whereby the engine has a characteristic map in which a plurality of set parameters associated with engine operating points, which are used by an engine controller as input variables for a comparison between set and actual values, is electronically stored for engine operation, and whereby the characteristic map includes an electronically stored compressor map (VD-KF) of the charge air compressor which represents the relationship between mass flow rate ($M_{red}$) and total pressure ratio (TT) at various turbocharger speeds ($n_{ATL}$), and in addition a plurality of engine operating lines (M-BL) for constant guide baffle positions (LEP) of the exhaust gas turbine and constant engine speeds ($n_M$) at various engine loads and engine modes (fired mode, engine braking mode, exhaust gas recirculation mode) is stored in the characteristic map, whereby the guide baffle position (LEP) is so adjusted in the exhaust gas recirculation mode of the engine that a turbine admission pressure ($p_3$) is higher than a pressure ($p_{2s}$) downstream of the compressor or downstream of an intercooler on the charge air side of the engine.

11. Device according to claim 10,
**characterised in that**
the characteristic map additionally includes electronically stored engine operating lines (M-BL) for a constant turbine admission pressure ($p_3$).

**Revendications**

1. Procédé de régulation d'un moteur à combustion interne suralimenté, dont la turbine de suralimentation à gaz d'échappement comprend une turbine à gaz d'échappement avec géométrie de turbine variable et un compresseur d'air de suralimentation, le moteur présentant un champ de caractéristiques dans lequel des paramètres de consigne associés à une pluralité de points de fonctionnement du moteur sont mémorisés de façon électronique pour le fonctionnement du moteur, ces paramètres servant à titre de grandeurs d'entrée d'un régulateur du moteur en vue d'une comparaison valeur réelle/valeur de consigne, et le champ de caractéristiques comprend un champ de caractéristiques de compresseur (VD-KF), mémorisées par voie électronique, pour le compresseur d'air de suralimentation (VD), ce champ de caractéristiques représentant pour différentes vitesses de rotation ($n_{ATL}$) de la turbine de suralimentation à gaz d'échappement, la dépendance entre le débit de masse ($M_{red}$) et le rapport de pression totale (P), et dans le champ de caractéristiques sont en outre mémorisées une pluralité de lignes de fonctionnement moteur (M-BL) pour des positions constantes (LEP) des grilles directrices de la turbine à gaz d'échappement et pour des vitesses de rotation constantes du moteur ($n_M$) pour différentes charges du moteur et différents modes de fonctionnement du moteur (fonctionnement en propulsion, fonctionnement en frein moteur, fonctionnement en recirculation de gaz échappement), procédé dans lequel on prélève du champ de caractéristiques et en dépendance de la charge moteur et/ou de la vitesse de rotation moteur ($n_M$) une position préférée (LEP) de la grille directrice (LE) de la turbine à gaz d'échappement pour le mode de fonctionnement moteur respectivement en présence, et cette position est régulée au niveau de la grille directrice (LE) de la turbine à gaz d'échappement, **caractérisé en ce que**, lors du fonctionnement du moteur en recirculation des gaz d'échappement, la position de la grille directrice (LEP) est régulée de telle manière qu'une pression d'entrée de turbine ($p_3$) est supérieure à une pression ($p_{2s}$) en aval du compresseur, ou en aval d'un refroidisseur d'air de suralimentation, sur le côté du moteur tourné vers l'air de suralimentation.

2. Procédé selon la revendication 1, **caractérisé en ce que** le champ de caractéristiques contient en supplément des lignes de fonctionnement moteur (M-BL), mémorisées par voie électronique, pour des pressions d'entrée constantes ($p_3$) dans la turbine, de sorte que l'on peut prélever du champ de caractéristiques, pour des vitesses de rotation différentes de la turbine de suralimentation à gaz d'échappement ($n_{ATL}$), des courants de masse différents du compresseur ($M_{red}$) et des rapports de pression différents (P) au compresseur, une pression d'entrée associée ($p_3$) vers la turbine.

3. Procédé selon l'une ou l'autre des revendications 1 et 2, **caractérisé en ce que**, en fonction de la charge moteur et du mode de fonctionnement moteur, on effectue un réglage optimal, par référence au degré d'efficacité du compresseur ($n_{VD}$), de la position de la grille directrice (LEP) de la turbine à gaz d'échappement.

4. Procédé selon l'une des revendications précédentes, **caractérisé en ce que**, lors d'une modification de la charge moteur (augmentation de la charge ou réduction de la charge), la vitesse de rotation moteur ($n_M$) est maintenue constante, en modifiant la position de la grille directrice (LEP) de la turbine à gaz d'échappement.

5. Procédé selon l'une des revendications précédentes, **caractérisé en ce que**, dans le mode de fonctionnement en frein moteur et lors d'un actionnement d'une valve de frein moteur, on prélève du champ de caractéristiques et via le débit de masse prédéterminé ($M_{red}$) du compresseur et via le rapport de pression totale prédéterminé (P) du compresseur, une position de la grille de guidage (LEP) qui correspond à la puissance requise pour le frein moteur.

6. Procédé selon la revendication 5, **caractérisé en ce que**, lors du fonctionnement en frein moteur, la phase non stationnaire à la transition d'un niveau de puissance de freinage faible ($B_{n1}$) et d'un niveau de puissance de freinage plus élevé ($B_{n2}$) est mise en oeuvre de telle façon que la grille directrice (LE) de la turbine à gaz d'échappement est tout d'abord fermée jusqu'à une valeur correspondant à une ligne de sécurité (PU) mémorisée dans le champ de caractéristiques et située avant une limite de pompage (PU) du compresseur, et est ensuite ouverte d'une valeur correspondant à un niveau de puissance de freinage ($B_{n2}$) plus élevé.

7. Procédé selon la revendication 5, **caractérisé en ce que** lors du fonctionnement en frein moteur, l'ordre de puissance de freinage envoyé au moteur peut être modifié par un déplacement automatique de la position de la grille de guidage (LEP) de la turbine à gaz d'échappement, de telle façon que la vitesse de rotation moteur ($n_M$) reste constante.

8. Procédé selon l'une des revendications précédentes, **caractérisé en ce que** la situation de lignes de fonctionnement sélectionnées dans le champ de caractéristiques peut être corrigée de manière adaptative par le système de régulation du moteur.

9. Procédé selon l'une des revendications précédentes, **caractérisé en ce que** des champs caractéristiques pour la turbine à gaz d'échappement sont mémorisés en supplément dans le champ de caractéristiques.

10. Dispositif pour la mise en oeuvre du procédé selon l'une des revendications 1 à 9, comprenant un moteur à combustion interne suralimenté, dont la turbine de suralimentation à gaz d'échappement comprend une turbine à gaz d'échappement avec géométrie de turbine variable et avec un compresseur d'air de suralimentation, le moteur présentant un champ de caractéristiques dans lequel sont mémorisés par voie électronique des paramètres de consigne associés à une pluralité de points de fonctionnement pour le fonctionnement du moteur, ces paramètres servant de grandeur d'entrée vers un régulateur moteur pour la comparaison valeur réelle/valeur de consigne, et le champ de caractéristiques comprend un champ caractéristique de compresseur (VD-KL), mémorisé par voie électronique, du compresseur d'air de suralimentation, ce champ représentant, pour des vitesses de rotation différentes de la turbine à gaz d'échappement ($n_{ATL}$), l'association entre le débit de masse ($M_{red}$) et le rapport de pression totale (P), et en ce que l'on dépose dans le champ de caractéristiques tout d'abord une pluralité de lignes de fonctionnement moteur (M-BL) pour des positions constantes de la grille directrice (LEP) de la turbine à gaz échappement et des vitesses de rotation moteur constantes ($n_M$) pour des charges moteur différentes et pour des modes de fonctionnement différents du moteur (fonctionnement en propulsion, fonctionnement en frein moteur, fonctionnement avec recirculation des gaz à d'échappement), et dans lequel, dans le fonctionnement en recirculation de gaz d'échappement du moteur, la position de la grille directrice (LEP) est régulée de telle manière qu'une pression à l'entrée de la turbine ($p_3$) est supérieure à une pression ($p_{2b}$) en aval du compresseur ou en amont d'un refroidisseur d'air de suralimentation, sur le côté du moteur vers l'air de suralimentation.

11. Dispositif selon la revendication 10, **caractérisé en ce que** le champ de caractéristiques contient en supplément des lignes de fonctionnement moteur (M-BL) mémorisées en supplément par voie électronique, pour maintenir une pression d'entrée constante dans la turbine (p 3).

Fig. 1

LEP₁
LEP₂
LEP₃
$n_M$ = const.
SL
108 000 1/min
$n_{VD}$
SG
99 000 1/min
88 500 1/min
VD – KF
79 000 1/min
69 000 1/min
67%
74%
75%
76%
77%
78%
64%
61%
P1
$M_{Md}$
LEP "offen" (Anschlag)
$n_{VD}$
50 000 1/min
$n_M$ = const.
LEP "geschlossen"
SL
VD – KF
PG

Totaldruckverhaeltnis $\pi_V$ = P2t/P1t (–)

reduzierter Massenstrom MO 1red [kg/s]

4.0
3.0
2.0
1.0

0.00
0.20
0.40
0.60

Fig. 2

Fig. 3

Fig. 4

Fig. 5

Fig. 6